# EUROPÄISCHE PATENTANMELDUNG

(11) **EP 1 276 224 A1**
(43) Veröffentlichungstag der Anmeldung: **15.01.2003**
(21) Anmeldenummer: 01810688.0
(22) Anmeldetag: 10.07.2001
(51) Int. Cl.: H02P 9/42, H02J 3/38

(54) **Frequenzumformeinrichtung für einen Windenergiepark sowie Verfahren zum Betrieb einer solchen Einrichtung**

(71) Anmelder: ABB Schweiz AG, 5400 Baden (CH)
(72) Erfinder: Guggisberg, Beat, 5417 Untersiggenthal (CH); Steimer, Peter, 5424 Unterehrendingen (CH); Steinke, Jürgen, 79774 Albbruck (DE)
(74) Vertreter: ABB Patent Attorneys

(57) **Zusammenfassung**

Es wird eine Frequenzumformeinrichtung für einen Windenergiepark angegeben, welche durch mindestens zwei mittels Windrotoren angetriebene Generatoren (1) gebildet ist und elektrische Energie zur Einspeisung in ein elektrisches Versorgungsnetz erzeugt, wobei die Generatoren (1) mit ihren Generatorphasenausgängen (R; S; T) an Koppelpunkten (K_{R}; K_{S}; K_{T}) parallel geschaltet sind und ein Gleichrichter (2) wechselspannungsseitig mit den Koppelpunkten (K_{R}; K_{S}; K_{T}) verbunden ist, wobei jeder Generator (1) mit einer Stabilisierungsschaltung (3) verbunden ist. Darüber hinaus wird ein Verfahren zum Betrieb der Frequenzumformeinrichtung angegeben.

## Beschreibung

### Technisches Gebiet

Die Erfindung bezieht sich auf das Gebiet der Leistungselektronik. Sie geht aus von einer Frequenzumformeinrichtung für einen Windenergiepark und einem Verfahren zum Betrieb einer solche Einrichtung gemäss dem Oberbegriff der unabhängigen Ansprüche.

### Stand der Technik

Windenergieparks, wie sie heute aufgrund schwindender Energieressourcen verstärkt als alternative Energielieferanten eingesetzt werden, werden gängigerweise an Land oder vor der Küste im Meer errichtet. Ein derartiger Windenergiepark ist in DE 196 20 906 C2 offenbart. Der Windenergiepark weist mindestens zwei Windrotoren auf, wobei jeder Rotor mit einem Generator mechanisch verbunden ist und diesen antreibt. Zur besseren Nutzung der Windenergie werden die Generatoren bekanntermassen mit variabler, einstellbarer Drehzahl beziehungsweise variabler elektrische Frequenz betrieben, wobei eine elektrische Maximalfrequenz üblich ist, die wesentlich kleiner ist, als die Netzfrequenz eines elektrischen Versorgungsnetzes von 50 Hz oder 60 Hz. Die Generatoren sind somit Teil einer Frequenzumformeinrichtung, die weiterhin eine Gleichrichtereinheit für jeden Generator aufweist, wobei jede Gleichrichtereinheit an ihrer Wechselspannungsseite mit dem zugehörigen Generator verbunden ist. Sämtliche Gleichrichtereinheiten sind ferner an ihren Gleichspannungsseiten miteinander verbunden. Mittels der Frequenzumformeinrichtung werden die durch die Generatoren erzeugten Generatorspannungen einer ersten Frequenz in eine Spannung einer zweiten Frequenz, möglicherweise auch in eine Gleichspannung mit der Frequenz Null, umgesetzt. Die Frequenzumformeinrichtung speist desweiteren diese Spannung als elektrische Energie in ein Übertragungssystem ein. Das Übertragungssystem ist mit einer Netzkopplungsstation verbunden, die über einen Netztransformator an ein gängiges elektrisches Versorgungsnetz angekoppelt ist.

Problematisch bei einer solchen Frequenzumformeinrichtung ist, dass jeder Generator mit einer vollständigen Frequenzumformeinrichtung verbunden ist, die ein gewisses Ausfallrisiko birgt und hohe Materialkosten verursacht. Zudem ist die Zugänglichkeit zu den einzelnen Frequenzumformeinrichtungen bei einem Windenergiepark im Meer zu Wartungs- und Reparaturzwecken besonders im windstarken Winterhalbjahr schwierig und verursacht erhebliche Kosten. Darüber hinaus sind die Energieerzeugungskosten fast unabhängig von der Grösse des Windenergieparks, da nur wenige Anlagenteile gemeinsam genutzt werden. Weiterhin problematisch ist, dass die Gleichspannung auf den Gleichspannungsseiten der Gleichrichtereinheiten direkt von der Generatorspannung bestimmt wird. Die bei einer Gleichspannung für lange Übertragungsstrecken des Übertragungssystems nötige hohe Gleichspannung, um eine möglichst verlustarme Übertragung erreichen zu können, kann nur durch entsprechende Hochspannungsgeneratoren oder durch einen zusätzlichen Hochsetzsteller erzielt werden. Dieses Massnahmen sind jedoch extrem material- und wartungsintensiv und verursachen damit zusätzliche Kosten.

### Darstellung der Erfindung

Aufgabe der Erfindung ist es deshalb, eine Frequenzumformeinrichtung für einen Windenergiepark anzugeben, die besonders einfach und robust aufgebaut ist und mit einer minimalen Anzahl an elektrischen und mechanischen Komponenten auskommt und mit geringem Schaltungsaufwand realisiert werden kann. Ferner ist ein Verfahren anzugeben, mit dem die erfindungsgemässe Frequenzumformeinrichtung besonders einfach und effizient betrieben werden kann. Diese Aufgaben werden durch die Merkmale des Anspruchs 1 und 11 gelöst. In den Unteransprüchen sind vorteilhafte Weiterbildungen der Erfindung angegeben.

Die erfindungsgemässe Frequenzumformeinrichtung weist mindestens zwei mittels Windrotoren angetriebene Generatoren auf, die elektrische Energie zur Einspeisung in ein elektrisches Versorgungsnetz erzeugen. Erfindungsgemäss sind die Generatoren mit ihren Generatorphasenausgängen an Koppelpunkten parallel geschaltet, wobei zusätzlich ein Gleichrichter wechselspannungsseitig mit den Koppelpunkten verbunden ist. Darüber hinaus ist jeder Generator erfindungsgemäss mit einer Stabilisierungsschaltung verbunden. Durch die parallele Schaltung der Generatorphasen an den Koppelpunkten und dem daran verbundenen Gleichrichter wird vorteilhaft ein sehr einfacher und wenig anfälliger Aufbau einer Frequenzumformeinrichtung für einen Windenergiepark erreicht, da auf die Vielzahl von aus dem Stand der Technik bekannten und mit jedem Generator wechselspannungsseitig verbundenen Gleichrichtereinheiten verzichtet werden kann. Somit kommt die Frequenzumformeinrichtung mit einer minimalen Anzahl an Komponenten aus und kann mit einem geringen Mass an Schaltungsaufwand realisiert werden. Zudem gestaltet sich die Frequenzumformeinrichtung nach der Erfindung aufgrund des einfachen Aufbaus und der wenigen Komponenten als sehr wartungs- und reparaturfreundlich.

Ferner kann möglichen Instabilitäten in den Generatorspannungen des Generator, die sich in Generatorpendelungen äussern, bei einem niederfrequenten Betrieb durch die jeweils mit einem Generator verbundene Stabilisierungsschaltung entgegengewirkt werden, so dass das Auftreten einer Zusatzbelastung der Generatoren und der damit verbundenen Windrotoren wesentlich reduziert werden kann. Weiterhin können die von den Generatoren erzeugten Generatorspannungen vorteilhaft stabilisiert werden, wodurch die durch den Gleichrichter auf dessen Gleichspannungsseite generierte Gleichspannung, insbesondere deren Amplitude, ebenfalls in erwünschtem Masse stabilisiert werden kann, ohne dass der Gleichrichter zur Erzielung einer stabilen Gleichspannung zusätzlich aufwendig ausgesteuert werden muss.

Beim erfindungsgemässen Verfahren zum Betrieb der Frequenzumformeinrichtung nach der Erfindung werden durch die Generatoren erzeugten Generatorspannungen einer ersten Frequenz in eine Spannung einer zweiten Frequenz umgesetzt. Den Generatoren wird erfindungsgemäss die erste Frequenz durch den Gleichrichter an dessen Wechselspannungsseite eingeprägt. Dadurch wird vorteilhaft erreicht, dass auf der Wechselspannungsseite des Gleichrichters ein stabiles elektrisches Netz mit Generatorspannungen der eingeprägten ersten Frequenz erzeugt wird. Die Generatoren können damit bei unterschiedlichsten Windverhältnissen in einem optimalen Arbeitspunkt mit maximaler Leistungsausbeute betrieben werden. Durch die zentrale Frequenzvorgabe ist vorteilhaft eine mechanische Drehzahlregelung in der einzelnen Windrotoren und somit der Generatoren überflüssig. Weiterhin wird zur Verbesserung der Stabilität der Generatorspannungen auf der Wechselspannungsseite des Gleichrichters jede Generatorspannung mittels der Stabilisierungsschaltung stabilisiert.

Diese und weitere Aufgaben, Vorteile und Merkmale der vorliegenden Erfindung werden aus der nachfolgenden detaillierten Beschreibung von bevorzugten Ausführungsbeispielen der Erfindung in Verbindung mit der Zeichnung offensichtlich.

### Kurze Beschreibung der Zeichnungen

Es zeigen:
- Fig. 1: eine erste Ausführungsform einer erfindungsgemässen Frequenzumformeinrichtung,
- Fig. 2: eine zweite Ausführungsform der erfindungsgemässen Frequenzumformeinrichtung,
- Fig. 3: eine dritte Ausführungsform der erfindungsgemässen Frequenzumformeinrichtung und
- Fig. 4: eine vierte Ausführungsform der erfindungsgemässen Frequenzumformeinrichtung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

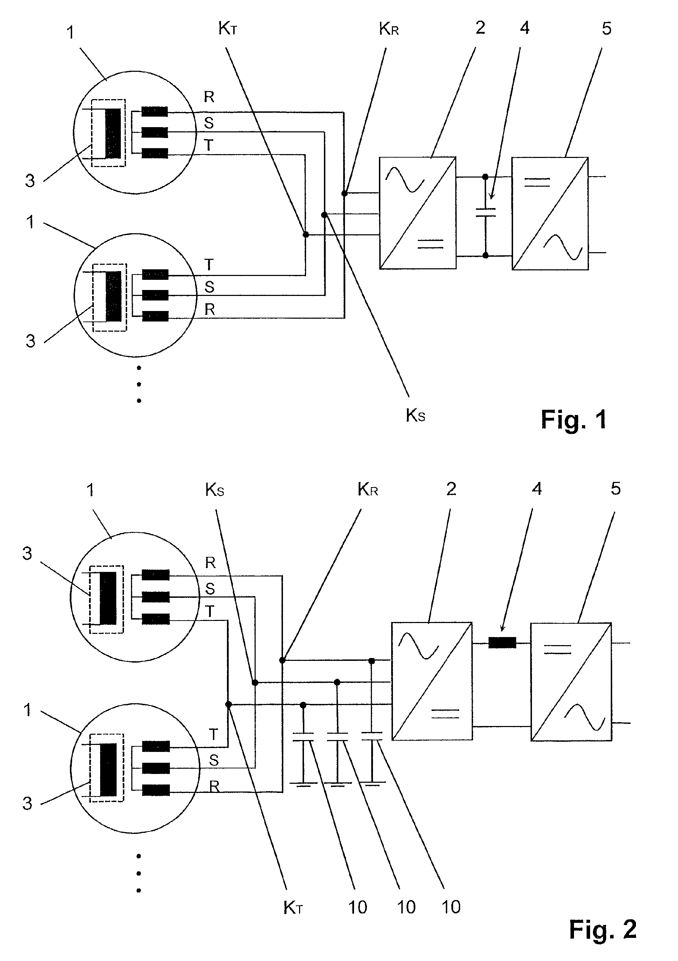

In Fig. 1 ist eine erste Ausführungsform einer erfindungsgemässen Frequenzumformeinrichtung für einen Windenergiepark gezeigt. Die Frequenzumformeinrichtung gemäss Fig. 1 ist durch mindestens zwei Generatoren 1 gebildet, wobei die Generatoren 1 von der Übersichtlichkeit halber nicht dargestellten Windrotoren angetrieben werden. Die Frequenzumformeinrichtung dient der Erzeugung elektrischer Energie zum Einspeisen in ein elektrisches Versorgungsnetz.

Erfindungsgemäss sind die Generatoren 1 gemäss Fig. 1 mit ihren Generatorphasenausgängen R, S, T an Koppelpunkten K_{R}, K_{S}, K_{T} für jede Generatorphase parallel geschaltet. An den Koppelpunkten K_{R}, K_{S}, K_{T} ist zudem ein Gleichrichter 2 wechselspannungsseitig verbunden. Darüber hinaus ist jeder Generator 1 mit einer Stabilisierungsschaltung 3 verbunden. Durch die parallele Schaltung der Generatorphasenausgänge R, S, T beziehungsweise der Generatorphasen an den Koppelpunkten K_{R}, K_{S}, K_{T} und dem daran verbundenen Gleichrichter 1 kann ein einfacher und robuster Aufbau der erfindungsgemässen Frequenzumformeinrichtung erreicht, wobei zusätzlich vorteilhaft auf die Vielzahl von aus dem Stand der Technik bekannten und mit jedem Generator 1 wechselspannungsseitig verbundenen Gleichrichtereinheiten verzichtet werden kann. Die Frequenzumformeinrichtung wird dadurch wesentlich kostengünstiger und darüber hinaus kann eine Reparatur und/oder Wartung der Frequenzumformeinrichtung dadurch erheblich erleichtert werden, insbesondere falls die Frequenzumformeinrichtung für einen Windpark im Meer vorgesehen ist.

Weiterhin kann vorteilhaft möglichen Instabilitäten in den Generatorspannungen des Generators 1, die sich in Generatorpendelungen äussern, durch die jeweils mit einem Generator 1 verbundene Stabilisierungsschaltung 3 bei einem niederfrequenten Betrieb entgegengewirkt werden, so dass die Möglichkeit einer Zusatzbelastung oder Überlastung der Generatoren 1 und der damit verbundenen Windrotoren wesentlich reduziert werden kann.

Gemäss Fig. 1 ist die Stabilisierungsschaltung 3 in mindestens einem Generator 1 als Dämpferwicklung ausgebildet, die als zusätzliche Wicklung zu den Statorwicklungen im Stator des Generators angeordnet ist. Ein Vorteil der Dämpferwicklung besteht darin, dass durch ihre passive Wirkung eine hohe Zuverlässigkeit der Frequenzumformeinrichtung erzielt werden kann.

Ferner ist der Gleichrichter 2 gemäss Fig. 1 mit seiner Gleichspannungsseite über einen Energiespeicherkreis 4 mit einem Wechselrichter 5, insbesondere mit dessen Gleichspannungsseite, verbunden. Die Wechselspannungsseite des Wechselrichters 5 ist mit einem Wechselspannungsübertragungssystem verbindbar, welches die Ankopplung an ein elektrisches Versorgungsnetz zur Einspeisung elektrischer Energie ermöglicht. Weiterhin kann mit dem Wechselrichter 5 eine Spannung an seiner Wechselspannungsseite einer beliebigen zweiten Frequenz f₂ gegenüber den Generatorspannungen mit einer ersten Frequenz f₁ je nach Anforderung an das elektrische Versorgungsnetz eingestellt werden. Vorzugsweise wird somit eine zweite Frequenz f₂ von 50Hz oder 60Hz eingestellt werden, die einer gängigen Netzfrequenz eines elektrischen Versorgungsnetzes entspricht. Es ist aber auch möglich, die Frequenz f₂ auf eine tiefere Frequenz als 50Hz oder 60 Hz einzustellen, wobei insbesondere die Frequenz Null vorteilhaft eingestellt werden kann und die Spannung an der Wechselspannungsseite des Wechselrichters 5 demnach eine Gleichspannung ist. Gemäss Fig. 1 weist der Energiespeicherkreis 4 einen kapazitiven Energiespeicher auf, der vorteilhaft zur Speicherung elektrischer Energie dient.

In Fig. 2 ist eine zweite Ausführungsform der erfindungsgemässen Frequenzumformeinrichtung gezeigt. Die zweite Ausführungsform der Frequenzumformeinrichtung unterscheidet sich von der vorstehend beschriebenen ersten Ausführungsform gemäss Fig. 1 dahingehend, dass der Energiespeicherkreis 4 einen induktiven Energiespeicher aufweist, der der Speicherung elektrischer Energie dient. Zur Spannungseinprägung auf der Wechselspannungsseite des Gleichrichters 2 ist ein Filterkondensator 10 mit jedem Koppelpunkt K_{R}, K_{S}, K_{T} verbunden, wobei die Filterkondensatoren 10 zusätzlich mit einem Massepotential verbunden sind.

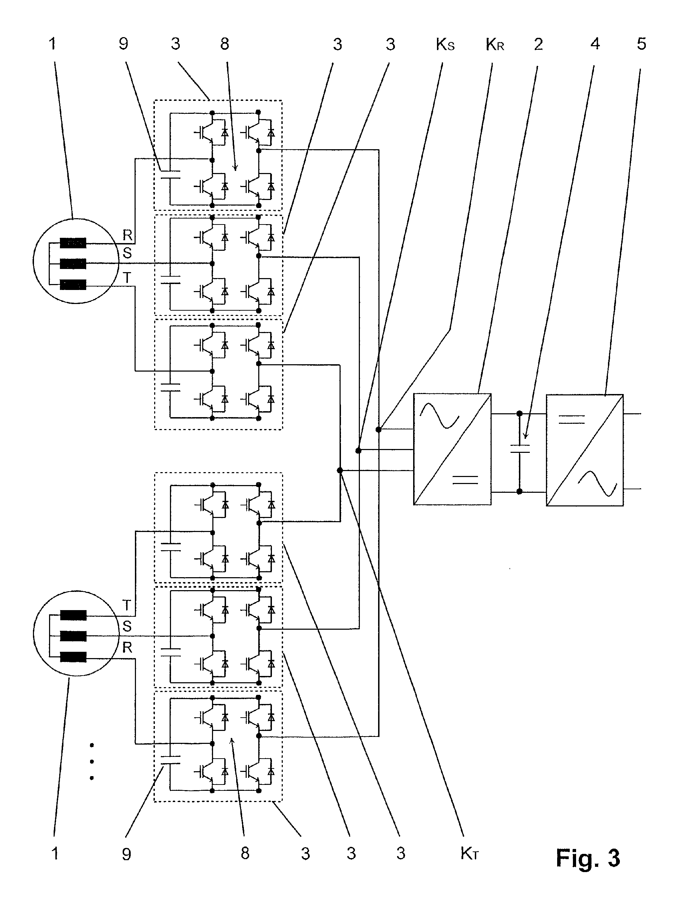

Darüber hinaus ist in Fig. 3 eine dritte Ausführungsform der erfindungsgemässen Frequenzumformeinrichtung dargestellt, wobei die Stabilisierungsschaltung 3 mindestens eines Generators 1 erfindungsgemäss als gesteuerte einphasige Spannungsquelle ausgebildet ist. Die einphasige Spannungsquelle ist zwischen jedem Generatorphasenausgang R, S, T des mindestens einen Generators 1 und dem zugehörigen Koppelpunkt K_{R}, K_{S}, K_{T} seriell eingeschaltet. Gemäss Fig. 3 umfasst jede einphasige Spannungsquelle einen einphasigen Zweiquadrantensteller 8, der aus ansteuerbaren Leistungshalbleitern, insbesondere Bipolartransistoren mit isoliert angeordneter Ansteuerelektrode und zu den Bipolartransistoren antiparallel geschaltete Dioden, aufgebaut ist. Zudem weist die einphasige Spannungsquelle einen Speicherkondensator 9 auf. Mittels der einphasige Spannungsquelle kann vorteilhaft auf die Dämpferwicklung im Generator 1 gemäss der vorstehend beschriebenen Ausführungsformen der Frequenzumformeinrichtung nach Fig. 1 und Fig. 2 verzichtet werden. Desweiteren können durch die einphasige Spannungsquelle vom Generator 1 zu liefernde Blindströme eingestellt werden und Oberschwingungsströme im Generator reduziert werden, um dessen Verluste zu vermindern.

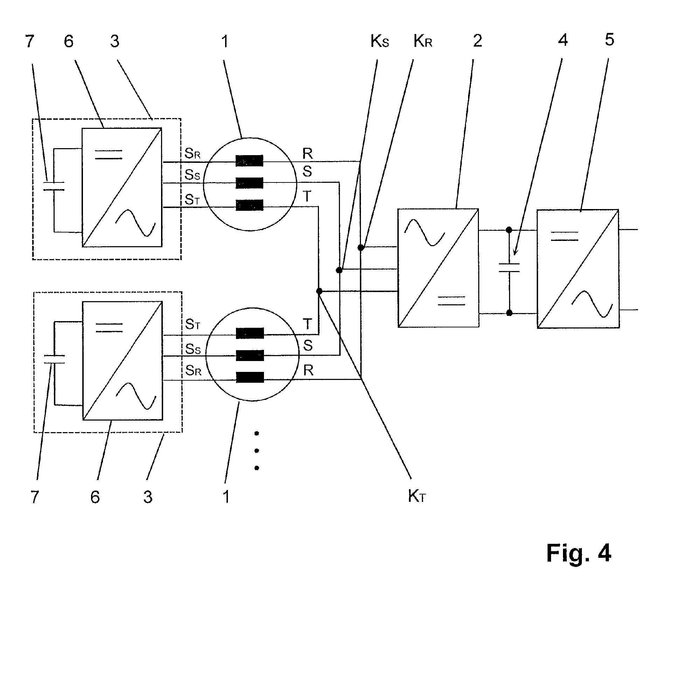

In Fig. 4 ist eine vierte Ausführungsform der erfindungsgemässen Frequenzumformeinrichtung gezeigt. Die gemäss Fig. 1, Fig. 2 und Fig. 3 in Sternschaltung geschalteten Statorwicklungen des Generators 1 sind in Fig. 4 nicht in einem Sternpunkt miteinander verbunden, sondern als Statorwicklungsausgänge S_{R}, S_{S}, S_{T} aus mindestens einem Generator herausgeführt. Gemäss Fig. 4 ist die Stabilisierungsschaltung 3 des mindestens einen Generators 1 als gesteuerte dreiphasige Spannungsquelle ausgebildet, wobei die dreiphasige Spannungsquelle an den Statorwicklungsausgängen S_{R}, S_{S}, S_{T} des mindestens einen Generators 1 angeschlossen ist. Die dreiphasige Spannungsquelle weist vorzugsweise einen dreiphasigen Zweiquadrantensteller 6 auf, mit dessen Gleichspannungsseite ein Energiespeicher 7 verbunden ist. Die Anordnung der dreiphasige Spannungsquelle erfolgt vorzugsweise nahe des Generators 1, so dass mit wenig Kabelmaterial ausgekommen werden und damit eine kostengünstige Frequenzumformeinrichtung erreicht werden kann.

Insgesamt ist mit der Stabilisierungsschaltung 3, insbesondere mit den vorstehend beschrieben Ausführungsformen der Stabilisierungsschaltung 3 gemäss den Fig. 1 bis Fig. 4, eine vorteilhafte Stabilisierung der von den Generatoren 1 erzeugten Generatorspannungen möglich. Die vom Gleichrichter 1 generierte Gleichspannung, insbesondere deren Amplitude, kann durch diese Stabilisierung ebenfalls in erwünschtem Masse stabilisiert beziehungsweise im wesentlichen konstant gehalten werden, so dass der Gleichrichter 1 nicht zusätzlich und aufwendig ausgesteuert werden muss, um eine im wesentlich konstante Gleichspannung zu erhalten. Vorteilhaft können die vorstehend beschriebenen Ausführungsformen der Stabilisierungsschaltung 3 gemäss Fig. 1 bis Fig. 4 innerhalb einer Frequenzumformeinrichtung kombiniert werden. Demnach ist es in einer Frequenzumformeinrichtung möglich, die Dämpferwicklung in einem Generator 1 gemäss Fig. 1 und Fig. 2 vorzusehen und einen anderen Generator 1 mit der gesteuerten dreiphasigen Spannungsquelle an seinen Statorwicklungsausgängen S_{R}, S_{S}, S_{T} gemäss Fig. 4 zu verbinden. Weiterhin besteht die Möglichkeit, in einer Frequenzumformeinrichtung die Dämpferwicklung in einem Generator 1 gemäss Fig. 1 und Fig. 2 vorzusehen und einen anderen Generator 1 mit der gesteuerten einphasigen Spannungsquelle zwischen jedem Generatorphasenausgang R, S, T eines anderen Generators 1 und dem zugehörigen Koppelpunkt K_{R}, K_{S}, K_{T} gemäss Fig. 3 seriell einzuschalten. Schliesslich ist es auch möglich, in einer Frequenzumformeinrichtung die gesteuerte einphasige Spannungsquelle zwischen jedem Generatorphasenausgang R, S, T eines Generators 1 und dem zugehörigen Koppelpunkt K_{R}, K_{S}, K_{T} gemäss Fig. 3 seriell einzuschalten und einen anderen Generator 1 mit der gesteuerten dreiphasigen Spannungsquelle an seinen Statorwicklungsausgängen S_{R}, S_{S}, S_{T} gemäss Fig. 4 zu verbinden. Diese vorstehend beschriebenen Kombinationen der Stabilisierungsschaltung 3 in der Frequenzumformeinrichtung sind der Übersichtlichkeit halber in den Fig.1 bis Fig. 4 nicht gezeigt.

Es hat sich ferner als besonders vorteilhaft erwiesen, die als einphasige Spannungsquelle ausgebildete Stabilisierungsschaltung 3 gemäss Fig. 3 und den Gleichrichter 2 zusammen in einem Modul zu integrieren. Durch diese Integration des Gleichrichters 2 und der Stabilisierungsschaltung nach Fig. 3 in einem Modul kann dieses Modul bei einem Windenergiepark im Meer, aber dennoch nahe genug an der Küste, an Land plaziert werden, wodurch die Wartung und Reparatur des Gleichrichters 2 und der entsprechenden Stabilisierungsschaltung 3 jahreszeitenunabhängig ist und damit eine erhebliche Kostenreduktion durch einen wesentlich geringeren Zeitaufwand erreicht werden kann. Für Windparks im Meer ist das Modul auf einer zentralen Plattform zu plazieren, so dass der Wartungs- und Reparaturaufwand und der damit verbundene Zeitbedarf aufgrund der vereinfachten Zugänglichkeit erheblich verkleinert werden kann. Vorteilhaft muss nicht mehr zu jedem aus dem Stand der Technik bekannten Windrotor mit Generator und der damit verbundenen Gleichrichtereinheit gefahren werden.

Beim erfindungsgemässe Verfahren zum Betrieb der Frequenzumformeinrichtung werden die durch die Generatoren 1 erzeugten Generatorspannungen einer ersten Frequenz f₁ in eine Spannung einer zweiten Frequenz f₂ umgesetzt. Erfindungsgemäss wird den Generatoren 1 die erste Frequenz f₁ durch den Gleichrichter 2 eingeprägt. Auf der Wechselspannungsseite des Gleichrichters 2 kann dadurch ein stabiles elektrisches Netz mit Generatorspannungen der eingeprägten ersten Frequenz f₁ erzeugt werden. Die Generatoren 1 können damit bei unterschiedlichsten Windverhältnissen in einem optimalen Arbeitspunkt mit maximaler Leistungsausbeute betrieben werden.

Jede Generatorspannung an dem zugehörigen Generatorphasenausgang R, S, T wird darüber hinaus erfindungsgemäss mit einer vorstehend beschriebenen Stabilisierungsschaltung 3 stabilisiert. Ist mindestens eine Stabilisierungsschaltung gemäss Fig. 1 und Fig. 2 als Dämpferwicklung ausgebildet, so wird mindestens eine Generatorspannung, nämlich die des jeweils zugehörigen Generators 1 passiv stabilisiert. Ist weiterhin eine Stabilisierungsschaltung 3 gemäss Fig. 4 als gesteuerte dreiphasige Spannungsquelle ausgebildet und an den Statorwicklungsausgängen S_{R}, S_{S}, S_{T} des zugehörigen Generators 1 angeschlossen, so wird mindestens eine Generatorspannung, nämlich die des jeweils zugehörigen Generators 1 aktiv stabilisiert. Ist ferner eine Stabilisierungsschaltung 3 gemäss Fig. 3 als gesteuerte einphasige Spannungsquelle ausgebildet und zwischen jedem Generatorphasenausgang R, S, T des zugehörigen Generators 1 und dem zugehörigen Koppelpunkt K_{R}, K_{S}, K_{T} gemäss Fig. 3 seriell eingeschaltet, so wird mindestens eine Generatorspannung, nämlich die des jeweils zugehörigen Generators 1 aktiv stabilisiert. Nach der bereits beschriebenen Kombination der Ausführungsformen der Stabilisierungsschaltung 3 gemäss Fig. 1 bis Fig. 4 innerhalb einer Frequenzumformeinrichtung und den vorstehend erläuterten Möglichkeiten, die entsprechenden Generatorspannungen zu stabilisieren, ist es demnach auch möglich, dass die jeweilige Generatorspannung entsprechend der unterschiedlichen Stabilisierungsschaltungen 3 innerhalb einer Frequenzumformeinrichtung unterschiedlich stabilisiert wird. Soll bei einem Windpark bei einer bestehenden Frequenzumformeinrichtung ein Generator 1 mit einer anderen Stabilisierungsschaltung 3 als die in der Frequenzumformeinrichtung bereits vorhandenen Stabilisierungsschaltungen 3 hinzugefügt werden, so ist dies problemlos ohne wesentliche Anpassung an die Frequenzumformeinrichtung möglich.

Insgesamt stellt die erfindungsgemässe Frequenzumformeinrichtung eine äusserst kostengünstige Lösung dar, da sie mit einem Minimum an Komponenten, insbesondere an Gleichrichtern 2, Energiespeicherkreisen 4 und Wechselrichtern 5 , auskommt und somit einfach zu realisieren ist und aufwendige Wartungs- und Reparaturarbeiten reduziert werden. Zudem ist durch das erfindungsgemässe Verfahren ein einfacher, stabiler und sehr effizienter Betrieb der erfindungsgemässen Frequenzumformeinrichtung ermöglicht.

### Bezugszeichenliste

- 1: Generator
- 2: Gleichrichter
- 3: Stabilisierungsschaltung
- 4: Energiespeicherkreis
- 5: Wechselrichter
- 6: dreiphasiger Zweiquadrantensteller
- 7: Energiespeicher
- 8: einphasiger Zweiquadrantensteller
- 9: Speicherkondensator
- 10: Filterkondensator
- K_{R}, K_{S}, K_{T}: Koppelpunkte
- R, S, T: Generatorphasenausgänge
- S_{R}, S_{S}, S_{T}: Statorwicklungsausgänge

## Patentansprüche

1. Frequenzumformeinrichtung für einen Windenergiepark gebildet durch mindestens zwei mittels Windrotoren angetriebene Generatoren (1), die elektrische Energie zur Einspeisung in ein elektrisches Versorgungsnetz erzeugen, **dadurch gekennzeichnet, dass** die Generatoren (1) mit ihren Generatorphasenausgängen (R; S; T) an Koppelpunkten (K_{R}; K_{S}; K_{T}) parallel geschaltet sind, und dass ein Gleichrichter (2) wechselspannungsseitig mit den Koppelpunkten (K_{R}; K_{S}; K_{T}) verbunden ist, wobei jeder Generator (1) mit einer Stabilisierungsschaltung (3) verbunden ist.

2. Frequenzumformeinrichtung nach Anspruch 1, **dadurch gekennzeichnet, dass** die Stabilisierungsschaltung (3) mindestens eines Generators (1) als Dämpferwicklung im Generator (1) ausgebildet ist.

3. Frequenzumformeinrichtung nach Anspruch 1 oder 2, **dadurch gekennzeichnet, dass** die Stabilisierungsschaltung (3) mindestens eines Generators (1) als gesteuerte dreiphasige Spannungsquelle ausgebildet ist, wobei die dreiphasige Spannungsquelle an Statorwicklungsausgängen (S_{R}; S_{S}; S_{T}) des mindestens einen Generators (1) angeschlossen ist.

4. Frequenzumformeinrichtung nach Anspruch 3, **dadurch gekennzeichnet, dass** die dreiphasige Spannungsquelle einen dreiphasigen Zweiquadrantensteller (6) mit einem Energiespeicher (7) aufweist.

5. Frequenzumformeinrichtung nach einem der vorhergehenden Ansprüche, **dadurch gekennzeichnet, dass** die Stabilisierungsschaltung (3) mindestens eines Generators (1) als gesteuerte einphasige Spannungsquelle ausgebildet ist, wobei die einphasige Spannungsquelle zwischen jedem Generatorphasenausgang (R; S; T) des mindestens einen Generators (1) und dem zugehörigen Koppelpunkt (K_{R}; K_{S}; K_{T}) seriell eingeschaltet ist.

6. Frequenzumformeinrichtung nach Anspruch 5, **dadurch gekennzeichnet, dass** die einphasige Spannungsquelle einen einphasigen Zweiquadrantensteller (8) und einen Speicherkondensator (9) aufweist.

7. Frequenzumformeinrichtung nach Anspruch 5, **dadurch gekennzeichnet, dass** die einphasige Spannungsquelle und der Gleichrichter (2) in einem Modul integriert sind.

8. Frequenzumformeinrichtung nach einem der vorhergehenden Ansprüche, **dadurch gekennzeichnet, dass** der Gleichrichter (2) gleichspannungsseitig über einen Energiespeicherkreis (4) mit einem Wechselrichter (5) verbunden ist.

9. Frequenzumformeinrichtung nach Anspruch 8, **dadurch gekennzeichnet, dass** der Energiespeicherkreis (4) einen kapazitiven Energiespeicher aufweist.

10. Frequenzumformeinrichtung nach Anspruch 8, **dadurch gekennzeichnet, dass** der Energiespeicherkreis (4) einen induktiven Energiespeicher aufweist, wobei mit jedem Koppelpunkt (K_{R}; K_{S}; K_{T}) ein Filterkondensator (10) verbunden ist.

11. Verfahren zum Betrieb einer Frequenzumformeinrichtung, welche durch mindestens zwei mittels Windrotoren angetriebene Generatoren (1) elektrische Energie zur Einspeisung in ein elektrisches Versorgungsnetz erzeugt, wobei durch die Generatoren (1) erzeugten Generatorspannungen einer ersten Frequenz (f₁) in eine Spannung einer zweiten Frequenz (f₂) umgesetzt werden, **dadurch gekennzeichnet,**
**dass** den Generatoren (1), welche mit ihren Generatorphasenausgängen (R; S; T) an Koppelpunkten (K_{R}; K_{S}; K_{T}) parallel geschaltet sind, die erste Frequenz (f₁) durch einen wechselspannungsseitig mit jedem Koppelpunkt (K_{R}; K_{S}; K_{T}) verbunden Gleichrichter (2) eingeprägt werden, und dass jede Generatorspannung mittels einer mit jedem Generator (1) verbundenen Stabilisierungsschaltung (3) stabilisiert wird.

12. Verfahren nach Anspruch 11, **dadurch gekennzeichnet, dass** mindestens eine Generatorspannung passiv mittels der eine Dämpferwicklung aufweisenden Stabilisierungsschaltung (3) stabilisiert wird.

13. Verfahren nach Anspruch 11 oder 12, **dadurch gekennzeichnet, dass** mindestens eine Generatorspannung aktiv mittels der als gesteuerte dreiphasige Spannungsquelle ausgebildeten und an den Statorwicklungsausgängen (S_{R}; S_{S}; S_{T}) des zugehörigen Generators (1) angeschlossenen Stabilisierungsschaltung (3) stabilisiert wird.

14. Verfahren nach einem der Ansprüche 11 bis 13, **dadurch gekennzeichnet, dass** mindestens eine Generatorspannung aktiv mittels der als gesteuerte einphasige Spannungsquelle ausgebildeten und zwischen jedem Generatorphasenausgang (R; S;T) des zugehörigen Generators (1) und dem zugehörigen Koppelpunkt (K_{R}; K_{S}; K_{T}) seriell eingeschalten Stabilisierungsschaltung (3) stabilisiert wird.
